# FASCICULE DE BREVET EUROPEEN

(11) **EP 3 233 517 B1**
(45) Date de publication et mention de la délivrance du brevet: **04.08.2021**
(21) Numéro de dépôt: 15821148.2
(22) Date de dépôt: 16.12.2015
(51) Int. Cl.: B42D 25/41, B42D 25/324, B41M 5/26, B42D 25/351

(54) **DISPOSITIF DE SÉCURITÉ À RÉSEAU LENTICULAIRE COMPRENANT PLUSIEURS MOTIFS COULEUR GRAVÉS**
SICHERHEITSVORRICHTUNG MIT EINEM LINSENARRAY MIT MEHREREN GEÄTZTEN FARBMUSTERN
SECURITY DEVICE WITH A LENS ARRAY COMPRISING SEVERAL ETCHED COLOUR PATTERNS

(30) Priorité: 17.12.2014 FR 1462657
(43) Date de publication de la demande: 25.10.2017
(73) Titulaire: IDEMIA France, 92400 Courbevoie (FR)
(72) Inventeur: BERTHE, Benoît, 92700 Colombes (FR); VANDROUX, Coralie, 92700 Colombes (FR)
(74) Mandataire: Santarelli
(86) Numéro de dépôt international: PCT/FR2015/053552
(87) Numéro de publication internationale: WO 2016/097608

(56) Documents cités:
- WO-A1-2013/098513
- WO-A2-2006/110038
- WO-A2-2012/162041
- DE-A1-102009 006 301
- FR-A1- 2 996 164
- FR-A1- 2 998 063
- US-A1- 2010 103 528
- None

## Description

La présente invention concerne un procédé de fabrication d'un dispositif de sécurité comprenant un réseau lenticulaire afin de permettre la visualisation sélective d'au moins deux motifs en fonction de la direction d'observation.

Un tel dispositif de sécurité est typiquement destiné à être apposé sur un support, tel un document identitaire, afin de l'authentifier. Un document identitaire est un document lié à son porteur tel qu'une carte nationale d'identité, un passeport, une carte d'assuré social, une carte bancaire, etc.

A cette fin, il est recherché un dispositif de sécurité difficilement reproductible afin de rendre difficile une fabrication ou une reproduction d'un tel dispositif. De plus un tel dispositif de sécurité est avantageusement personnalisable afin de le rendre unique. La possibilité de réaliser au moins un motif en couleur permet de complexifier un dispositif de sécurité tout en améliorant ses capacités figuratives.

Un réseau lenticulaire, encore appelé feuille lenticulaire, est composée de lentilles élémentaires de mêmes caractéristiques optiques, les lenticules, qui ont la particularité d'avoir une longueur focale telle que la face arrière, la face lisse, du réseau lenticulaire soit confondue avec le plan focal des lenticules. Chaque lenticule grossit, dans une image située sous le réseau lenticulaire, une zone élémentaire qui est situé dans l'alignement de l'œil et du centre optique de la lenticule.

Afin de réaliser un dispositif comprenant plusieurs motifs, il est connu au moins deux modes de réalisation.

Un premier mode de réalisation, que l'on nomme « pré-imprimé » permet, en disposant une image spécialement adaptée sous un réseau lenticulaire, de visualiser différents motifs, chaque motif étant visible individuellement selon un axe de visualisation propre. Il est ainsi possible de réaliser une image composite, adaptée au réseau lenticulaire sous laquelle elle est disposée, comprenant n motifs. Chaque tel motif est visible selon un axe de vision propre au motif. On passe d'un axe de vision à un autre axe de vision voisin par une rotation. Une telle image adaptée est typiquement réalisée séparément pour être ensuite assemblée avec le réseau lenticulaire. L'image, typiquement imprimée en offset, et par conséquent les motifs, peuvent être en couleur. Un tel mode de réalisation réalise l'image très tôt dans le processus de fabrication, et profite avantageusement d'une image unique, ce qui le rend particulièrement bien adapté à une production en série. Il n'est pas contre pas adapté à une personnalisation, que l'on souhaite individualisée, modifiant un motif, au dernier moment, par exemple pour l'associer à un porteur lors d'une remise finale.

Selon un deuxième mode de réalisation, que l'on nomme « post-gravé », il est encore possible de réaliser un motif, par gravure dans une couche image. La gravure est typiquement réalisée au moyen d'un faisceau, tel un faisceau laser. Ledit faisceau vient modifier la couche image, sensible à ce faisceau, par apport d'énergie. Selon une première variante, la gravure est réalisée au travers du réseau lenticulaire. Selon cette première variante, ledit faisceau est orienté, relativement au dispositif, selon un axe principal qui détermine un axe de vision selon lequel le motif ainsi gravé est ensuite visible au travers du réseau lenticulaire. Il est encore possible en modifiant l'orientation relative entre le dispositif et l'outillage de gravure, entre deux gravures successives, de réaliser des motifs multiples, visibles séparément chacun selon un axe de vision propre. Selon une deuxième variante, il est possible de graver en l'absence du réseau lenticulaire. Dans cette variante, la gravure est optiquement modifiée pour simuler la présence du réseau lenticulaire. Ainsi, par exemple les angles de tir sont modifiés afin de reproduire les déviations qu'aurait causées le réseau lenticulaire. Ces deux variantes du deuxième mode de réalisation permettent de réaliser un motif, lors d'une des dernières opérations de fabrication, y compris après assemblage du réseau lenticulaire, ce qui les rend bien adaptées à une personnalisation. Cependant, Du fait du principe de modification, par carbonisation, la gravure laser ne permet de réaliser que des motifs monochromes.

Le document DE102009006301A1 décrit par exemple un document de sécurité dans lequel des marquages sont formés dans une couche d'enregistrement optiquement variable par l'action d'un rayonnement laser selon différentes directions, à travers un réseau de lentilles qui recouvre la couche d'enregistrement optiquement variable.

Les deux modes de réalisation précédents « pré-imprimé » et « post-gravé » permettent de réaliser des dispositifs assez semblables, en ce qu'ils comprennent n motifs séparés, visibles chacun selon un axe de vision propre au motif. On passe d'un axe de vision d'un motif à un autre par une rotation du dispositif selon un angle caractéristique du réseau lenticulaire. Une analyse fine d'un dispositif permet cependant de déterminer avec certitude son moyen d'obtention.

Il est fortement souhaité de pouvoir combiner les avantages des deux modes de réalisation : une production de motifs couleur, avec une mise en œuvre sur un dispositif presque terminé, au cours d'une phase finale du processus de fabrication ou phase de personnalisation. Pour cela la présente invention propose un procédé de fabrication d'un dispositif de sécurité où un motif est réalisé, par gravure laser, en couleur.

L'invention a pour objet un procédé de fabrication d'un dispositif de sécurité comprenant un premier motif couleur visible selon un axe de vision associé et au moins un deuxième motif couleur visible selon un axe de vision associé, comprenant les étapes suivantes : assemblage d'une couche image apte à former au moins un motif couleur par gravure laser, au-dessus d'un support, gravure laser dans la couche image du premier motif couleur, selon son axe de vision (Δα) associé, de telle manière à ce qu'il puisse être vu au travers d'un réseau lenticulaire, pour chacun desdits au moins un deuxième motif couleur, gravure laser dans la couche image dudit au moins un deuxième motif couleur, selon son axe de vision associé, de telle manière à ce qu'il puisse être vu au travers d'un réseau lenticulaire. Dans la présente invention, la couche image, assemblée pour former au moins un motif couleur par gravure laser, au-dessus du support, comprend une matrice de pixels, chaque pixel comprenant une pluralité de sous-pixels, chaque sous-pixel comprenant une couleur élémentaire et étant apte à être sélectivement activé ou désactivé au moyen d'un laser, de manière à exprimer ou à cacher ladite couleur élémentaire, les couleurs élémentaires étant choisies dans une base colorimétrique.

Selon une autre caractéristique, le procédé comprend encore une étape d'assemblage d'un réseau lenticulaire au-dessus de la couche image.

Selon une autre caractéristique, une étape de gravure est réalisée en l'absence du réseau lenticulaire.

Selon une autre caractéristique, une étape de gravure est réalisée au travers du réseau lenticulaire.

Selon une autre caractéristique, le réseau lenticulaire est cylindrique, sphérique, pyramidal ou polyhédrique.

Selon une autre caractéristique, le plan focal du réseau lenticulaire est disposé au plus près de la couche image.

Selon une autre caractéristique, la couche image comprend une première matrice de pixels, apte à former un premier motif et au moins une seconde matrice de pixels, apte à former au moins un deuxième motif couleur, lesdites matrices étant entrelacées.

Selon une autre caractéristique, le réseau lenticulaire est cylindrique, et la ou les matrice(s) est/sont linéaire(s), d'axe sécant à l'axe du réseau lenticulaire.

Selon une autre caractéristique, l'angle entre l'axe de la/des matrice(s) et l'axe du réseau lenticulaire (7) est égal à 90° +/-45°, préférentiellement égal à 90° +/-5°.

Selon une autre caractéristique, la couche image comprend encore une couche masque supérieure, disposée entre la matrice de pixels et le réseau lenticulaire, sensible au laser, afin de pouvoir sélectivement désactiver un sous-pixel par gravure d'un masque supérieur au moyen d'un laser.

Selon une autre caractéristique, la couche image comprend encore une couche masque inférieure, disposée entre la matrice de pixels et le support, sensible au laser, afin de pouvoir sélectivement désactiver un sous-pixel par gravure d'un masque inférieur au moyen d'un laser.

Selon une autre caractéristique, le réseau lenticulaire est insensible au laser.

Selon une autre caractéristique, une garde, insensible au laser, est ménagée sous le réseau lenticulaire, ladite garde présentant une épaisseur telle qu'elle inclut toute intersection entre un axe de vision et un axe de vision.

Selon une autre caractéristique, le premier motif est différent dudit au moins un deuxième motif.

Selon une autre caractéristique, non revendiquée, chacun desdits au moins un deuxième motif reproduit le premier motif spatialement décalé afin de simuler un mouvement du motif.

Selon une autre caractéristique, non revendiquée, ledit au moins un deuxième motif reproduit le premier motif avec au moins une couleur différente afin de simuler une variation de couleur.

D'autres caractéristiques, détails et avantages de l'invention ressortiront plus clairement de la description détaillée donnée ci-après à titre indicatif en relation avec des dessins sur lesquels :
- la figure 1 présente un schéma de principe d'un dispositif à motifs multiples basé sur un réseau lenticulaire,
- la figure 2 présente un détail agrandi d'une couche image apte à être gravée en couleur.

Tout mode de réalisation, décrit ci après, qui ne serait pas supporté par l'objet des revendications qui suivent, serait à considérer comme ne faisant pas partie de la présente invention.

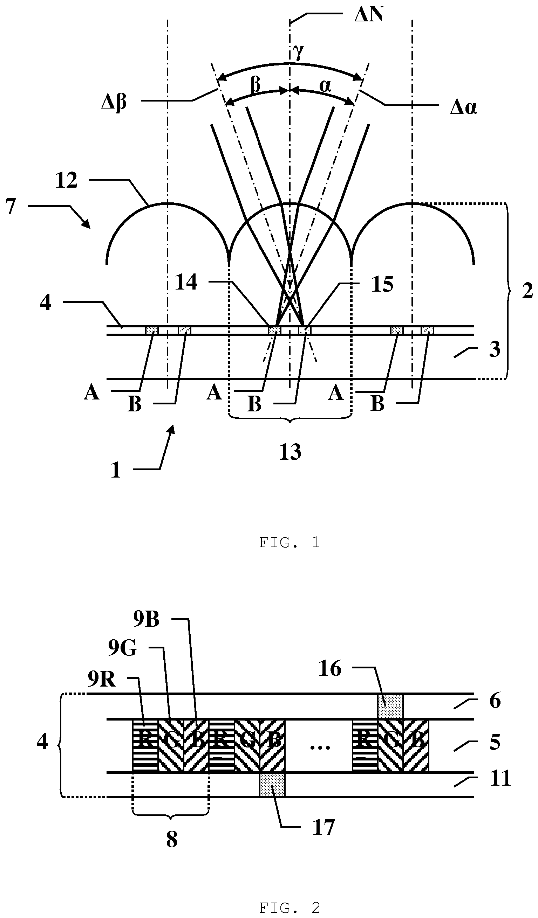

Tel qu'illustré à la figure 1, un réseau lenticulaire 7 comprend une succession périodique de lenticules 12, présentant chacune un profil sensiblement hémicirculaire.

Il est possible de réaliser des réseaux lenticulaires 7 de différents types. Un premier type est un réseau lenticulaire 7 cylindrique. Dans un réseau lenticulaire 7 cylindrique, chaque lenticule 12 présente un profil sensiblement hémicylindrique. Les lenticules 12 cylindriques sont parallèles entre elles. Chaque lenticule 12 grossit une zone élémentaire en forme de bande, de largeur correspondant à la largeur d'une lenticule 12, d'une image située sous le réseau lenticulaire 7.

Un autre type de réseau lenticulaire, nommé pyramidal, est obtenu par croisement dans un même plan de deux tels réseaux lenticulaires cylindriques. Dans un tel réseau les lenticules 12 sont sensiblement cubiques avec quatre arrêtes supérieures arrondies. Une telle lenticule 12 présente une forme carrée dans le plan du réseau lenticulaire 7 et une forme hémicirculaire dans les deux plans perpendiculaires passant respectivement par les deux axes des cylindres. Les lenticules 12 sont organisées selon une matrice carrée. Chaque lenticule 12 grossit une zone élémentaire ou pixel en forme de carré à deux côtés/croix carrée à deux branches dont les deux largeurs des côtés/branches correspondent à la largeur d'une lenticule 12, d'une image située sous le réseau lenticulaire 7.

En généralisant, un autre type de réseau lenticulaire 7, nommé polygonal, est obtenu par croisement dans un même plan de n tels réseaux lenticulaires 7 cylindriques. Dans un tel réseau les lenticules 12 sont sensiblement polygonales à 2n côtés avec 2n arrêtes supérieures arrondies. Une telle lenticule 12 présente une forme polygonale à 2n côtés dans le plan du réseau lenticulaire 7 et une forme hémicirculaire dans les n plans perpendiculaires passant respectivement par les n axes des cylindres. Les lenticules 12 sont organisées selon une matrice. Chaque lenticule 12 grossit une zone élémentaire ou pixel en forme de polygone à 2n côtés/croix à 2n branches dont les largeurs des 2n côtés/branches correspondent à la largeur d'une lenticule 12, d'une image située sous le réseau lenticulaire 7.

En considérant un nombre n infini, il est obtenu un réseau lenticulaire 7 sphérique. Dans un tel réseau sphérique les lenticules 12 sont sensiblement hémisphériques. Une telle lenticule 12 présente une forme circulaire dans le plan du réseau lenticulaire 7 et une forme hémicirculaire dans tout plan perpendiculaire au plan du réseau lenticulaire 7. Les lenticules 12 sont typiquement organisées selon une matrice carrée (en damier) ou hexagonale (en nid d'abeille). Chaque lenticule 12 grossit une zone élémentaire ou pixel en forme de cercle de diamètre correspondent à la largeur/au diamètre d'une lenticule 12, d'une image située sous le réseau lenticulaire 7.

L'invention est applicable à tout type de réseau lenticulaire 7.

La figure 1, unidimensionnelle, est ainsi applicable à tous les types de réseau lenticulaire 7. Elle figure une coupe selon un plan normal à la surface du réseau lenticulaire 7. Dans le cas d'un réseau lenticulaire 7 cylindrique, la coupe est perpendiculaire à un axe Δ d'extension des cylindres.

Sous le réseau lenticulaire 7 est disposée une couche image 4. Cette couche image 4 est périodiquement divisée en tronçons 13, chaque tronçon 13 correspondant à une lenticule 12 et étant sensiblement en regard d'une lenticule 12. Chaque tronçon 13 comprend des segments 14-15 de motifs A, B.

La figure 1 illustre un exemple avec deux motifs A, B, mais il est possible d'avoir plus de motifs.

Du fait de la forme de la lenticule 12, un observateur voit les segments 14 d'un premier motif A lorsqu'il regarde selon un premier axe de vision Δα. A partir de tous les segments 14 de tous les tronçons 13 d'un dispositif 1, l'œil reconstruit le premier motif A. De même, un observateur voit les segments 15 d'un deuxième motif B lorsqu'il regarde selon un deuxième axe de vision Δβ. A partir de tous les segments 15 de tous les tronçons 13 d'un dispositif 1, l'œil reconstruit le deuxième motif B. Afin qu'un segment 14 du premier motif A et un segment 15 du deuxième motif B ne se superposent pas, au risque de perturber le rendu d'un des motifs A, B, il convient de respecter un angle γ caractéristique du réseau lenticulaire 7 entre l'orientation α du premier axe de vision Δα et l'orientation β du deuxième axe de vision Δβ. Si le premier axe de vision Δα, respectivement le deuxième axe de vision Δβ, présente par rapport à une référence, telle que la normale ΔN à la surface du dispositif 1, un angle a, respectivement un angle β, l'angle β-α entre le premier axe de vision Δα et le deuxième axe de vision Δβ, est multiple de γ.

Le mode de réalisation « pré-imprimé » permet de réaliser des motifs couleur, mais n'est pas adapté à la personnalisation, aussi ce mode de réalisation n'est pas retenu.

Le mode de réalisation « post-gravé » utilise une couche image 4 modifiable, en ce qu'elle est sensible au laser. Une gravure est typiquement réalisée au moyen d'un faisceau, tel un faisceau laser, directement sur une couche image 4 sans réseau lenticulaire, ou au travers dudit réseau lenticulaire 7 assemblé au-dessus de la couche image 4. La gravure peut dans ce deuxième cas avantageusement être réalisée a posteriori, après assemblage du réseau lenticulaire 7 et des différentes couches 3,4, sur l'ensemble terminé.

La gravure, en variant la position et l'intensité du faisceau, vient par apport d'énergie, modifier la couche image modifiable 4 et réaliser au moins un motif A, B en gravant les segments correspondants 14,15.

Dans le cas où le réseau lenticulaire 7 est en place au-dessus de la couche image 4, il est possible de graver au travers du réseau lenticulaire 7. Une lenticule 12 est ici utilisée optiquement selon un chemin optique inverse de celui de vision. Cependant un tel chemin est symétrique et en orientant le faisceau, relativement au dispositif 1, selon un axe principal pendant la gravure d'un motif A, respectivement B, cet axe principal de gravure détermine un axe de vision Δα, respectivement Δβ, selon lequel ledit motif A, respectivement B, ainsi gravé est ensuite visible. Ainsi un motif A, respectivement un motif B, visible depuis un axe de vision Δα, respectivement Δβ, doit être gravé en orientant le faisceau de gravure selon ledit axe de vision Δα, respectivement Δβ. En référence à la figure 1, un faisceau orienté selon le premier axe Δα, grave dans une couche image 4 modifiable, un segment 14 d'un premier motif A. Ce premier motif A sera ensuite visible selon ce premier axe Δα. De manière analogue, un faisceau orienté selon le deuxième axe Δβ, grave dans une couche image 4 modifiable, un segment 15 d'un deuxième motif B. Ce deuxième motif B sera ensuite visible selon ce deuxième axe Δβ.

Il est ainsi possible, en modifiant l'orientation du dispositif 1 ou du faisceau de gravure d'un angle γ entre deux gravures, de réaliser des motifs A, B multiples et distincts, visibles séparément chacun selon un axe de vision propre, sans interférence entre les motifs A,B.

Dans le cas où le réseau lenticulaire 7 n'est pas présent lors de la gravure, sa présence est simulée en corrigeant les angles de tir du faisceau de gravure, tels qu'ils seraient déviés par le réseau lenticulaire 7. Ainsi une mise en place ultérieure du réseau lenticulaire 7 au-dessus de la couche image, dans les conditions de position et d'orientation utilisées pour la simulation, permet de faire apparaitre les motifs A,B.

Selon l'art antérieur, du fait du principe de modification de la couche image 4, par carbonisation, la gravure laser ne permet de réaliser que des motifs monochromes. Typiquement, le faisceau de gravure brûle la couche image 4, par exemple en polycarbonate transparent, enrichie en carbone. Cette brûlure laisse apparaître du noir de carbone. Une modulation de la puissance du faisceau permet de réaliser une grande variété de niveaux de gris.

Afin de pouvoir graver un motif en couleur, l'invention remplace avantageusement la couche image de l'art antérieur, simplement brulable en monochrome, en une couche image 4 apte à former un motif couleur par gravure laser.

L'invention concerne un procédé de fabrication d'un dispositif de sécurité 1. Le dispositif 1 comprend un premier motif A couleur visible selon un axe de vision Δα associé. Le dispositif 1 comprend encore au moins un deuxième motif B couleur visible selon un axe de vision Δβ associé. Dans la pratique il est possible de diviser un tronçon 13 correspondant à une lenticule 12 de manière distinguable jusqu'à quatre motifs.

Le procédé comprend les étapes suivantes. Une première étape consiste à assembler dans l'ordre : un support 3 accueillant et offrant une rigidité au dispositif 1 et une couche image 4 apte à former au moins un motif couleur par gravure laser. Ces différentes couches plastiques peuvent ainsi être assemblées par tout procédé, tel que collage, ou encore laminage, typiquement à chaud.

Toutes les étapes précédentes peuvent être réalisées en série afin de produire, en quantité, des dispositifs 1 pour lesquels il ne reste plus à réaliser que l'étape de personnalisation. L'étape de personnalisation comprend avantageusement la réalisation des motifs couleurs A,B au moyen d'une gravure laser, réalisée sur le produit presque fini.

La gravure laser peut être réalisée au travers du réseau lenticulaire 7, s'il est assemblé ou en son absence, dans le cas où il est assemblé ultérieurement. Un premier motif A couleur est gravé selon son axe de vision Δα associé, dans la couche image 4. Pour chacun desdits au moins un deuxième motif B couleur, il est encore procédé de même par gravure laser selon l'axe de vision Δβ propre associé à chaque motif B, dans la couche image 4. Que le réseau lenticulaire 7 soit présent ou absent, la gravure des motifs A,B couleur, est réalisée de telle manière à ce que, une fois un réseau lenticulaire 7 effectivement mis en place au-dessus de la couche image 4, chacun des motifs A,B puisse être vu au travers dudit réseau lenticulaire 7.

Si le réseau lenticulaire 7 est absent lors de la gravure, la gravure, en termes d'angles de tir est adaptée afin de simuler la présence du réseau lenticulaire 7. Ainsi en l'absence du réseau lenticulaire 7, les angles incidents du faisceau de gravure avec la couche image 4 sont simulés. Cette simulation les modifie de manière à ce qu'ils soient égaux aux angles qui auraient été obtenus, déviés par le réseau lenticulaire 7. Le procédé comprend encore une étape ultérieure d'assemblage du réseau lenticulaire 7 au-dessus de la couche image 4, positionné et orienté en accord avec ce qui a été simulé.

Si le réseau lenticulaire 7 est présent lors de la gravure, la gravure est classiquement réalisée, comme dans le cas monochrome, au travers dudit réseau lenticulaire 7. Le réseau lenticulaire 7 peut être présent en étant assemblé. Alternativement il peut être présent lors de la gravure sans être assemblé. Dans ce dernier Une étape d'assemblage ultérieure est réalisée.

Le réseau lenticulaire 7 peut être de tout type. Ainsi, il peut être cylindrique, sphérique, pyramidal ou polyédrique.

Afin que par gravure laser, il soit possible de réaliser un motif A,B couleur, la couche image 4 comprend une matrice de pixels 5. La figure 2 illustre un mode de réalisation d'une couche image 4 comprenant une telle matrice de pixels 5. La disposition et le contenu d'un pixel 8 peuvent varier selon différents modes de réalisation. Cependant, de manière générique, dans tous les cas, chaque pixel 8 comprend une pluralité de sous-pixels. Un sous-pixel 9 se caractérise en ce qu'il comprend une unique couleur élémentaire et en ce qu'il est apte à être sélectivement activé, de manière à exprimer ladite couleur élémentaire, ou à être désactivé, de manière à cacher ladite couleur élémentaire.

A l'instar de la gravure laser monochrome, l'activation ou la désactivation d'un sous-pixel peut être progressive et permettre ainsi des niveaux gradués d'expression de chaque couleur élémentaire.

La cartographie de la matrice de pixels 5 peut être quelconque, la forme et le contenu précis d'un pixel 8 peut être quelconque, constante, ou variable d'un pixel 8 à l'autre. Les couleurs élémentaires sont avantageusement choisies dans une base colorimétrique, afin de pouvoir, par combinaison, exprimer une grande variété de teintes résultantes. Ainsi dans l'exemple illustré, un pixel 8 comprend trois sous-pixels, génériquement désignés 9, et chacun associé à une couleur parmi Rouge (R), Vert (G) et Bleu (B). Dans cet exemple un sous-pixel 9R comprend la couleur rouge, un sous-pixel 9G comprend la couleur verte et un sous-pixel 9B comprend la couleur bleue. Un sous-pixel 9 et un seul de chaque pixel 8 est associé à chacune des couleurs et une seule.

Alternativement à l'exemple précédent, utilisant une base colorimétrique RVB (RGB), il peut être utilisé une autre base colorimétrique, telle que Cyan, Magenta, Jaune (Yellow) CMY, ou plus de trois couleurs élémentaires, tel que RGBW, RGBK, CMYW ou CMYK, en ajoutant le blanc (White) ou le noir (blacK). Un pixel 8 peut encore comprendre plusieurs sous-pixels 9 de couleurs redondantes. Ainsi pour réaliser un motif A,B à forte densité de rouge, des pixels 8 comprenant 1 sous-pixel vert, 1 sous-pixel bleu et 2 sous-pixels rouges est avantageusement possible.

Sur la base d'une telle couche image 4, en connaissant la cartographie de la matrice de pixels 5, il est possible de réaliser un motif A,B couleur, en activant et/ou désactivant sélectivement les couleurs comprises dans les sous-pixels 9, typiquement au moyen d'un laser. Ainsi de manière additive (activation) ou soustractive (désactivation) il est possible d'exprimer, pour chaque pixel 8 une teinte, combinaison des couleurs de ses sous-pixels 9, et ainsi réaliser un motif A,B couleur par gravure laser.

Afin d'obtenir un rendu des couleurs optimal, il convient que couche image 4 et plus précisément la matrice de pixels 5 soit confondue avec le plan focal du réseau lenticulaire 7. De manière pratique, la couche image 4, et ainsi la matrice de pixels 5, est avantageusement disposée au plus près dudit plan focal.

La couche image 4 peut comprendre une unique matrice, et la gravure des différents motifs A,B est réalisée indifféremment, dans les pixels présents dans les zones 14,15 définies par le réseau lenticulaire 7 en relation avec les axes Δα et Δβ.

Alternativement, la couche image 4 peut comprendre une matrice de pixel dédiée à chacun des motifs couleur A,B. Ainsi la couche image 4 comprend un première matrice de pixels apte à former le premier motif couleur A et au moins une deuxième matrice de pixels, apte à former chacun desdits au moins un deuxième motif couleur B. Dans ce cas, du fait de l'entrelacement des secteurs de motif 14,15, lié au réseau lenticulaire 7 et au découpage en lenticules, lesdites matrices sont entrelacées de manière correspondante.

Il convient encore que lesdites matrices soient disposées, relativement au réseau lenticulaire 7 selon certaines relations géométriques. Ainsi dans le cas d'un réseau lenticulaire 7 cylindrique, les matrices de pixels sont avantageusement linéaires aussi. Il convient pour que les motifs A,B puissent être vus, et le cas échéant gravés, au travers du réseau lenticulaire 7, que l'axe du réseau lenticulaire 7 ne soit pas confondu avec l'axe des lignes des matrices de pixels. Aussi l'axe de la ou des matrice(s) de pixels est avantageusement sécant à l'axe des lenticules cylindriques du réseau lenticulaire 7. Dès que les deux axes sont sécants, la faisabilité est acquise. Cependant, cette condition est d'autant mieux réalisée que les deux axes sont perpendiculaires.

Aussi est-il préférable que l'angle entre l'axe de la/les matrice(s) et l'axe du réseau lenticulaire 7 soit égal à 90° +/-45°, et encore préférable qu'il soit égal à 90° +/-5°.

Selon un premier mode de réalisation, l'activation ou la désactivation est réalisée en utilisant le laser directement dans la matrice de pixels 5. Une activation est ainsi possible pour un sous-pixel 9 comprenant une couleur s'exprimant, avantageusement avec une intensité proportionnelle à l'énergie émise par le faisceau laser, lorsqu'elle reçoit l'énergie du laser. Ceci est envisageable avec un pigment ou une encre thermo ou lumino activable. Au contraire, une désactivation est possible pour un sous-pixel 9 comprenant un pigment ou une encre, par exemple, thermolabile.

Selon un autre mode de réalisation, toutes les couleurs des sous-pixels 9 des pixels 8 de la matrice de pixels 5 sont exprimées. La couche image 4 comprend encore une couche masque supérieure 6, disposée au-dessus de la matrice de pixels 5, soit entre la matrice de pixels 5 et le réseau lenticulaire 7. Cette couche masque supérieure 6, est sensible au laser, à la manière d'une couche selon l'art antérieur, et est apte à être gravée en monochrome. Ainsi, au moyen du laser, il est possible de réaliser sélectivement un masque supérieur 16, d'opacité proportionnelle à l'énergie modulable transmise par le laser, au droit de chaque sous-pixel 9. Ceci permet ainsi, de manière soustractive, de déterminer une teinte résultante (non masquée) pour chaque pixel 8 et ainsi réaliser un motif A,B couleur.

Selon un autre mode de réalisation, alternatif ou complémentaire, toutes les couleurs des sous-pixels 9 des pixels 8 de la matrice de pixels 5 sont exprimées et la couche image 4 comprend encore une couche masque inférieure 11, disposée en-dessus de la matrice de pixels 5, soit entre la matrice de pixels 5 et le support 3. Cette couche masque inférieure 11, est sensible au laser, à la manière d'une couche selon l'art antérieur, et est apte à être gravée en monochrome. Ainsi, au moyen du laser, il est possible de réaliser sélectivement un masque inférieur 17, d'opacité proportionnelle à l'énergie modulable transmise par le laser, au droit de chaque sous-pixel 9. Ceci permet ainsi, de manière soustractive, de déterminer une teinte résultante (non masquée) pour chaque pixel 8 et ainsi réaliser un motif A,B couleur.

Un masque supérieur 16 masque une couleur en s'interposant entre la couleur et l'œil. Un masque inférieur 17 masque une couleur en absorbant la lumière qui ne peut se réfléchir sur le support 3.

Dans ces deux modes de réalisation, la matrice de pixel 5 peut avantageusement ne pas être sensible au laser.

Dans le mode de réalisation où la gravure laser est réalisée au travers du réseau lenticulaire 7, les faisceaux laser assurant la réalisation des différents motifs A,B, peuvent se croiser dans ledit réseau lenticulaire 7 ou dans une certaine épaisseur située juste en dessous. Aussi il est important que le réseau lenticulaire 7 soit insensible au laser. Avantageusement encore, une garde, insensible au laser, est ménagée sous le réseau lenticulaire 7. Cette garde est telle qu'elle présente une épaisseur telle qu'elle inclut toute intersection entre un faisceau laser selon un axe de vision Δα et un faisceau laser selon un axe de vision Δβ.

Ainsi il n'apparait pas, dans le réseau lenticulaire 7, ou dans l'épaisseur de garde située immédiatement en dessous, de gravure parasite, correspondant à plusieurs motifs A,B, éventuellement mélangés et brouillant la visibilité des motifs A,B.

L'invention concerne un dispositif de sécurité 1 obtenu par ce procédé.

Un tel dispositif de sécurité 1 est avantageux principalement en ce qu'il permet de réaliser des images multiples couleur, et ce par gravure, soit au cours d'une des dernières étapes de fabrication d'un dispositif 1, en permettant ainsi une personnalisation.

Selon une caractéristique importante de l'invention, le premier motif A est différent dudit au moins un deuxième motif B. Ceci permet avantageusement de placer, dans un même dispositif de sécurité 1, au moins deux informations en un même endroit, garantissant ainsi un gain de place et une compacité. Ainsi, par exemple pour un dispositif de sécurité 1 apposé sur un document de voyage tel un passeport, il est possible d'inclure dans le dispositif de sécurité 1, le nom, le prénom et la photo d'identité couleur du titulaire. Ceci est réalisé par gravure, particulièrement adaptée à la phase de personnalisation.

Selon un mode de réalisation, il est encore possible d'avoir le deuxième motif B et les suivants, reproduisant le premier motif A, spatialement décalés, afin de simuler un mouvement du motif et de réaliser une animation cinématique.

De manière spécifique à l'invention, il est maintenant possible de réaliser des animations basées sur la couleur. Ainsi il est possible d'avoir le deuxième motif B et les suivants, reproduisant le premier motif A, avec au moins une couleur différente afin de simuler une variation de couleur et ainsi réaliser une animation colorée.

Il est bien évidement possible de combiner ces deux modes de réalisation et réaliser une animation cinématique et colorée.

## Revendications

1. Procédé de fabrication d'un dispositif de sécurité (1) comprenant un premier motif (A) couleur visible selon un axe de vision (Δα) associé et au moins un deuxième motif (B) couleur visible selon un axe de vision (Δβ) associé, tel qu'il comprend les étapes suivantes :
- assemblage d'une couche image (4), apte à former au moins un motif (A,B) couleur par gravure laser, au-dessus d'un support (3), la couche image (4) comprenant une matrice de pixels (5), chaque pixel (8) comprenant une pluralité de sous-pixels (9), chaque sous-pixel (9) comprenant une couleur élémentaire et étant apte à être sélectivement activé ou désactivé au moyen d'un laser, de manière à exprimer ou à cacher ladite couleur élémentaire, les couleurs élémentaires étant choisies dans une base colorimétrique,
- gravure laser dans la couche image (4) du premier motif (A) couleur, selon son axe de vision (Δα) associé, de telle manière à ce qu'il puisse être vu au travers d'un réseau lenticulaire (7),
- pour chacun desdits au moins un deuxième motif (B) couleur, gravure laser dans la couche image (4) dudit au moins un deuxième motif (B) couleur, selon son axe de vision (Δβ) associé, de telle manière à ce qu'il puisse être vu au travers du réseau lenticulaire (7).

2. Procédé selon la revendication **1,** comprenant encore une étape d'assemblage du réseau lenticulaire (7) au-dessus de la couche image (4).

3. Procédé selon la revendication **2,** où une étape de gravure est réalisée en l'absence du réseau lenticulaire (7).

4. Procédé selon la revendication **2,** où une étape de gravure est réalisée au travers du réseau lenticulaire (7).

5. Procédé selon l'une quelconque des revendications **2** à **4,** où le réseau lenticulaire (7) est cylindrique, sphérique, pyramidal ou polyédrique.

6. Procédé l'une quelconque des revendications **2** à **5,** où le plan focal du réseau lenticulaire (7) est disposé au plus près de la couche image (4).

7. Procédé selon l'une quelconque des revendications **1** à **6,** où la couche image (4) comprend une première matrice de pixels, apte à former un premier motif (A) et au moins une seconde matrice de pixels, apte à former au moins un deuxième motif (B) couleur, où lesdites matrices sont entrelacées.

8. Procédé selon l'une quelconque des revendications **5,** ou des revendications **7** et **5,** où le réseau lenticulaire (7) est cylindrique, et où la ou les matrice(s) est/sont linéaire(s), d'axe sécant à l'axe du réseau lenticulaire.

9. Procédé selon l'une quelconque des revendications **1** à **8,** où la couche image (4) comprend encore une couche masque supérieure (6), disposée entre la matrice de pixels (5) et le réseau lenticulaire (7), sensible au laser, afin de pouvoir sélectivement désactiver un sous-pixel (9) par gravure d'un masque supérieur (16) au moyen d'un laser.

10. Procédé selon l'une quelconque des revendications **1** à **9,** où la couche image (4) comprend encore une couche masque inférieure (11), disposée entre la matrice de pixels (5) et le support (3), sensible au laser, afin de pouvoir sélectivement désactiver un sous-pixel (9) par gravure d'un masque inférieur (17) au moyen d'un laser.

11. Procédé selon la revendication **4,** où le réseau lenticulaire (7) est insensible au laser.

12. Procédé selon l'une quelconque des revendications **4** ou 11, où une garde, insensible au laser, est ménagée sous le réseau lenticulaire (7), ladite garde présentant une épaisseur telle qu'elle inclut toute intersection entre un axe de vision (Δα) et un axe de vision (Δβ).

13. Procédé selon l'une quelconque des revendications **1** à 12, où le premier motif (A) est différent dudit au moins un deuxième motif (B).

## Patentansprüche

1. Verfahren zur Herstellung einer Sicherheitsvorrichtung (1), die ein erstes Farbmuster (A), das entlang einer zugehörigen Betrachtungsachse (Δα) sichtbar ist, und mindestens ein zweites Farbmuster (B) umfasst, das entlang einer zugehörigen Betrachtungsachse (Δβ) sichtbar ist, das die folgenden Schritte umfasst:
- Montage einer Bildschicht (4), die geeignet ist, durch Lasergravur mindestens ein Farbmuster (A, B) zu bilden, über einem Träger (3), wobei die Bildschicht (4) eine Pixel-Matrix (5) umfasst, wobei jedes Pixel (8) eine Vielzahl von Unterpixeln (9) umfasst, wobei jedes Unterpixel (9) eine Elementarfarbe umfasst und geeignet ist, mittels eines Lasers selektiv aktiviert oder deaktiviert zu werden, derart, dass die Elementarfarbe ausgedrückt oder verborgen wird, wobei die Elementarfarben in einer Farbbasis ausgewählt werden,
- Laser-Gravur des ersten Farbmusters (A) in der Bildschicht (4) entlang seiner zugehörigen Betrachtungsachse (Δα), derart, dass es durch ein Linsenarray (7) betrachtet werden kann,
- für jedes des mindestens einen zweiten Farbmusters (B), Laser-Gravur des mindestens einen zweiten Farbmusters (B) in der Bildschicht (4) entlang seiner zugehörigen Betrachtungsachse (Δβ), derart, dass es durch das Linsenarray (7) betrachtet werden kann.

2. Verfahren nach Anspruch 1, das ferner einen Schritt des Montierens des Linsenarrays (7) über der Bildschicht (4) umfasst.

3. Verfahren nach Anspruch 2, wobei bei Nichtvorhandensein des Linsenarrays (7) ein Gravurschritt ausgeführt wird.

4. Verfahren nach Anspruch 2, wobei ein Gravurschritt durch das Linsenarray (7) hindurch ausgeführt wird.

5. Verfahren nach einem der Ansprüche 2 bis 4, wobei das Linsenarray (7) zylindrisch, kugelförmig, pyramidenförmig oder polyedrisch ist.

6. Verfahren nach einem der Ansprüche 2 bis 5, wobei die Brennebene des Linsenarrays (7) am nächsten an der Bildschicht (4) angeordnet wird.

7. Verfahren nach einem der Ansprüche 1 bis 6, wobei die Bildschicht (4) eine erste Pixel-Matrix, die geeignet ist, ein erstes Muster (A) zu bilden, und mindestens eine zweite Pixel-Matrix umfasst, die geeignet ist, mindestens ein zweites Farbmuster (B) zu bilden, wobei die Matrizes verflochten sind.

8. Verfahren nach Anspruch 5 oder einem der Ansprüche 7 und 5, wobei das Linsenarray (7) zylindrisch ist und wobei die eine oder mehreren Matrizes linear ist/sind und eine Achse aufweist/aufweisen, die die Achse des Linsenarrays schneidet.

9. Verfahren nach einem der Ansprüche 1 bis 8, wobei die Bildschicht (4) ferner eine obere Maskenschicht (6) umfasst, die zwischen der Pixel-Matrix (5) und dem Linsenarray (7) angeordnet ist und gegenüber dem Laser empfindlich ist, derart, dass ein Unterpixel (9) durch Gravur einer oberen Maske (16) mittels eines Lasers selektiv deaktiviert werden kann.

10. Verfahren nach einem der Ansprüche 1 bis 9, wobei die Bildschicht (4) ferner eine untere Maskenschicht (11) umfasst, die zwischen der Pixel-Matrix (5) und dem Träger (3) angeordnet ist und gegenüber dem Laser empfindlich ist, derart, dass ein Unterpixel (9) selektiv durch Gravur einer unteren Maske (17) mittels eines Lasers deaktiviert werden kann.

11. Verfahren nach Anspruch 4, wobei das Linsenarray (7) gegenüber dem Laser unempfindlich ist.

12. Verfahren nach einem der Ansprüche 4 oder 11, wobei ein Schutz, der gegenüber dem Laser unempfindlich ist, unter dem Linsenarray (7) eingerichtet ist, wobei der Schutz eine Dicke aufweist, die derart ist, dass sie jede Überschneidung zwischen einer Betrachtungsachse (Δα) und einer Betrachtungsachse (Δβ) umfasst.

13. Verfahren nach einem der Ansprüche 1 bis 12, wobei das erste Muster (A) sich von dem mindestens einen zweiten Muster (B) unterscheidet.

## Claims

1. A process for manufacturing a security device (1) comprising a first color pattern (A) that is visible along an associated viewing axis (Δα) and at least one second color pattern (B) that is visible along an associated viewing axis (Δβ), such that it comprises the following steps:
- assembling an image layer (4), able to form at least one color pattern (A, B) by laser etching, above a carrier (3), the image layer (4) comprising a pixel matrix array (5), each pixel (8) comprising a plurality of sub-pixels (9), each sub-pixel (9) comprising an elementary color and being able to be selectively activated or deactivated by means of a laser, so as to express or hide said elementary color, the elementary colors being chosen from a color space,
- laser etching in the image layer (4) the first color pattern (A), along its associated viewing axis (Δα), in such a way that it may be seen through a lenticular array (7),
- for each of said at least one second color pattern (B), laser etching in the image layer (4) said at least one second color pattern (B), along its associated viewing axis (Δβ), in such a way that it may be seen through a lenticular array (7)

2. The process as claimed in claim 1, also comprising a step of assembling the lenticular array (7) above the image layer (4).

3. The process as claimed in claim 2, wherein an etching step is carried out in the absence of the lenticular array (7).

4. The process as claimed in claim 2, wherein an etching step is carried out through the lenticular array (7) .

5. The process as claimed in any one of claims 2 to 4, wherein the lenticular array (7) is cylindrical, spherical, pyramidal or polyhedral.

6. The process as claimed in any one of claims 2 to 5, wherein the focal plane of the lenticular array (7) is placed as close as possible to the image layer (4)

7. The process as claimed in any one of claims 1 to 6, wherein the image layer (4) comprises a first matrix array of pixels, able to form a first pattern (A), and at least one second matrix array of pixels, able to form at least one second color pattern (B), said matrix arrays being interlaced.

8. The process as claimed in any one of claims 5, or claims 7 and 5, wherein the lenticular array (7) is cylindrical, and wherein the one or more matrix arrays is/are linear and of axis secant to the axis of the lenticular array.

9. The process as claimed in any one of claims 1 to 8, wherein the image layer (4) also comprises an upper masking layer (6), which is placed between the pixel matrix array (5) and the lenticular array (7), sensitive to the laser, in order to be able to selectively deactivate a sub-pixel (9) by etching an upper mask (16) by means of a laser.

10. The process as claimed in any one of claims 1 to 9, wherein the image layer (4) also comprises a lower masking layer (11), placed between the pixel matrix array (5) and the carrier (3), sensitive to the laser, in order to be able to selectively deactivate a sub-pixel (9) by etching a lower mask (17) by means of a laser.

11. The process as claimed in claim 4, wherein the lenticular array (7) is insensitive to the laser.

12. The process as claimed in any one of claims 4 or 11, wherein a guard, insensitive to the laser, is arranged under the lenticular array (7), said guard having a thickness such that it includes any intersection between a viewing axis (Δα) and a viewing axis (Δβ) .

13. The process as claimed in any one of claims 1 to 12, wherein the first pattern (A) is different from said at least one second pattern (B).
